# EUROPEAN PATENT APPLICATION

(11) **EP 3 078 251 A1**
(43) Date of publication of application: **12.10.2016**
(21) Application number: 16164111.3
(22) Date of filing: 06.04.2016
(51) Int. Cl.: A01C 23/02, A01B 13/02, A01B 61/04, A01C 9/00

(54) **AGRICULTURAL SPRAYING APPARATUS**

(30) Priority: 07.04.2015 GB 201505903
(71) Applicant: Target Set Technology Limited, Ely, Cambridgeshire CB7 4BP (GB)
(72) Inventor: SYKES, Robert Owen, Downham Market, Norfolk PE38 0NS (GB); HOLMES, Richard Alan, Ely, Cambridgeshire CB7 4QG (GB)
(74) Representative: Boult Wade Tennant

(57) **Abstract**

An agricultural spraying apparatus (1) for injecting a liquid product into a raised ridge formed in a terrain, the agricultural spraying apparatus comprising an injector unit (7) mounted to a support frame (4); the injector unit comprising: an injector member (13) comprising: an elongate feed conduit (24); the injector unit being supported by the support frame such that, in use of the agricultural spraying apparatus, the injector member is enabled to penetrate the raised ridge to permit injection of liquid product into the raised ridge; wherein the injector member of the injector unit is spring-mounted so as to be pivotally-movable relative to the support frame.

## Description

The present disclosure is directed to an agricultural spraying apparatus, for example for the application of liquid fertilizer products.

### Background to the Disclosure

It is known to plant some crops, for example potatoes, in raised beds formed in a terrain. The raised bed may be formed by a Bed Former which builds up the earth of the raised bed above the level of the surrounding terrain. The seed is placed in the raised bed by a Seed Planter, for example, a Potato Planter, the Seed Planter then forms the raised ridge in which the potatoes grow. The raised ridge typically has a cross-sectional shape which is substantially triangular or trapezoidal - having angled side faces which extend upwardly from the surrounding terrain. A plurality of raised ridges may be formed in parallel to one another.

It is also known that the growth of some crops benefits from the application of fertilizer. Typically, said fertilizer can be applied in a liquid form by spraying the foliage of the crops at an appropriate point during the growing season. However, for some crops, in particular tuber crops, for example potatoes, it may be beneficial to apply the liquid fertilizer in close proximity to the tubers which are located under the surface within the raised ridge. This may be achieved by placement of liquid or granular fertilizer into the raised ridge.

While there may be benefits in placing liquid fertilizer into the raised ridge, this can have certain drawbacks. First, for large-scale application of liquid fertilizer it is typical to use a spraying apparatus which is self-propelled or machine-towed behind a suitable vehicle such as a tractor. The spraying apparatus in use will not be stationary with respect to the raised ridge but will be moving along the longitudinal axis of the raised ridge - which in the following will be referred to as the direction of movement of the agricultural spraying apparatus.

The present applicant has now discovered that penetrating the raised ridge with an injector member of the spraying apparatus in order to inject liquid fertilizer directly into the raised ridge may result in significant disruption of the raised ridge as the injector member is conveyed in the direction of movement of the agricultural spraying apparatus. In turn this can lead to drying out of the raised ridge which may result in a detrimental reduction in crop yields and also may increase the incidence and severity of crop diseases, for example Common Scab infections of potatoes, due to the drying out of the raised ridge. Secondly, the conveyance of an injector member within the raised ridge may lead to impact damage of the injector member due to the presence of hard obstructions, such as stones and rocks, within the raised ridge. Thirdly, since the size and shape of raised ridges can vary significantly for different crops and from field to field, it can be time consuming to set up the spraying apparatus in order to inject liquid fertilizer at the desired location within each raised ridge.

### Summary of the Disclosure

The present disclosure therefore provides in a first aspect an agricultural spraying apparatus for injecting a liquid product into a raised ridge formed in a terrain, the agricultural spraying apparatus comprising an injector unit mounted to a support frame;
the injector unit comprising:
an injector member comprising:
   an elongate feed conduit;
the injector unit being supported by the support frame such that, in use of the agricultural spraying apparatus, the injector member may penetrate the raised ridge to permit injection of liquid product into the raised ridge;
characterised in that the injector member of the injector unit is sprung-mounted so as to be pivotably-movable relative to the support frame.

Beneficially, the spring-mounting of the injector member relative to the support frame allows the injector unit to deflect if it contacts a substantial obstruction within the raised ridge, for example a large stone or rock. In this way the effect of the impact is lessened and the chance of damage to the injector member is reduced. Once past the obstruction the injector member may be biased back into its normal orientation.

The agricultural spraying apparatus of the first aspect may comprise one or more of the following features which may be present singularly or in any combination.

The injector member may be biased by its spring-mounting into a rest position in which it extends from the support frame perpendicularly to the direction of movement of the agricultural spraying apparatus but is pivotable against the bias of the spring-mounting on encountering an obstruction in the raised ridge into a deflected position in which a distal end of the injector member is rearward-directed relative to the direction of movement of the agricultural spraying apparatus.

The injector unit may further comprise an injector unit body which is sprung-mounted to the support frame and the injector member may be coupled to the injector unit body.

The injector unit body may comprise a first part coupled to the injector member and a second part which is sprung-mounted to the support frame, wherein the first part and second part may be pivotably mounted to each other. In one example, the first part and the second part are pivotally connected to each other about a first axis and the second part is pivotally connected to the support frame about a second axis which is perpendicular to the first axis. In this example, the injector member may be pivotable into the deflected position by rotation of the second part about the second axis. Further, rotation of the first part about the first axis may permit an angle of penetration of the injector member into the raised ridge to be adjusted. Varying the angle of penetration of the injector member will be discussed further below.

The spring-mounting of the injector unit body may comprise a torsion-sprung shaft of the second part which is pivotally coupled to the support frame. Alternatively, the spring-mounting of the injector unit body may comprise use of helical springs (or similar) which extend between the second part and a fixed part coupled to the support frame.

The support frame may comprise a longitudinally-extending ridge plate located and angled to be positioned, in use, in proximity to a side of the raised ridge formed in the terrain. Typically, the support frame will comprise two longitudinally-extending ridge plates located and angled to be positioned, in use, either side of the raised ridge formed in the terrain. The injector member may be biased by its spring-mounting into a rest position in which it extends perpendicularly to the longitudinally-extending ridge plate but is pivotable against the bias of the spring-mounting on encountering an obstruction into a deflected position in which the injector member is rearward-directed relative to the direction of movement of the agricultural spraying apparatus. In such an example, the injector unit may be mounted to the longitudinally-extending ridge plate with the injector member protruding through an aperture in the longitudinally-extending ridge plate.

The injector member may further comprise a blade element for cutting through the raised ridge during use of the agricultural spraying apparatus. Preferably, an outer diameter of the elongate feed conduit is less than or equal to a thickness of the blade element and the elongate feed conduit is mounted within the blade element such that an external surface of the elongate feed conduit is flush with, or recessed relative to, first and second faces of the blade element. In one example the blade element has a thickness of 5 mm or less. The blade element may comprise a leading section positioned to one side of the elongate feed conduit and a trailing section positioned to the other side of the elongate feed conduit.

By incorporating the injector member into a blade element the present applicant has found that disruption and drying out of the raised ridge can be significantly reduced. The blade element provides structural reinforcement to the elongate feed conduit allowing a reduced diameter of elongate feed conduit to be used compared to a self-supporting elongate feed conduit. Further, by configuring the blade element to have a thin leading edge and profile in the work direction of the agricultural spraying apparatus and by mounting the elongate feed conduit flush with, or recessed relative to, the first and second faces of the blade element, the conveyance of the injector member through the raised ridge is eased and is found to be less disruptive to the integrity of the raised ridge.

The blade element may comprise one or more mounting points for connection to the elongate feed conduit.

The blade element may be reversibly-mountable within the injector unit and may comprise a mounting point at each end of the blade element for connection to the elongate feed conduit. Beneficially, configuring the blade element to be reversible can increase the working life of the blade element. The end of the blade element that protrudes into the raised ridge will be subject to wear and tear. After wear is encountered the blade element may be reversed so that the opposed end of the blade element protrudes into the raised ridge in use.

The injector unit may further comprise a depth adjustment mechanism permitting relative movement between the blade element and the support frame such that a depth of penetration of the injector member into the raised ridge may be adjusted.

The depth adjustment mechanism may permit alteration of an effective protruding length of the blade element from the support frame.

The blade element may be slidably engageable in an injector unit body of the injector unit.

Further aspects of the present disclosure will now be described. In these further aspects the support frame may comprise one or more longitudinally-extending ridge plates and/or the injector member may comprise a blade element as described above with respect to the first aspect.

The present disclosure provides in a second aspect an agricultural spraying apparatus for injecting a liquid product into a raised ridge formed in a terrain, the agricultural spraying apparatus comprising an injector unit mounted to a support frame;
the injector unit comprising:
an injector member comprising:
   an elongate feed conduit;
the injector unit being supported by the support frame such that, in use of the agricultural spraying apparatus, the injector member may penetrate the raised ridge to permit injection of liquid product into the raised ridge;
characterised in that the injector unit comprises an angle adjustment mechanism permitting relative movement between the injector member and the support frame such that an angle of penetration of the injector member into the raised ridge may be adjusted.

Beneficially, enabling alteration of the angle of penetration of the injector member into the raised ridge allows for more accurate and flexible injection of the liquid product into the raised ridge. This is a particular benefit where there agricultural spraying apparatus comprises multiple injector units. For example, the support frame may comprise two longitudinally-extending ridge plates located and angled to be positioned, in use, either side of the raised ridge formed in the terrain. Each longitudinally-extending ridge plate may comprise one, two or more injector units. The angle of penetration of the injector member of each injector unit may be individually set. Thus, injection of liquid product into the base, mid-region and/or top of the raised ridge may be achieved during one pass of the agricultural spraying apparatus. In this way a more even application of the liquid product within the raised ridge can be achieved.

The agricultural spraying apparatus of the second aspect may comprise one or more of the following features which may be present singularly or in any combination.

The injector unit may further comprise an injector unit body which is coupled to the support frame and the injector member may be coupled to the injector unit body to permit the injector member to be selectively fixed relative to the support frame at a plurality of angles.

The injector unit body may comprise a first part coupled to the injector member and a second part coupled to the support frame, wherein the first part and second part are pivotably mounted to each other. The first part and the second part may be pivotally connected to each other about a first axis and the second part may be pivotally connected to the support frame about a second axis which is perpendicular to the first axis. In this example, rotation of the first part about the first axis permits the angle of penetration of the injector member into the raised ridge to be adjusted.

The present disclosure provides in a third aspect an agricultural spraying apparatus for injecting a liquid product into a raised ridge formed in a terrain, the agricultural spraying apparatus comprising an injector unit mounted to a support frame;
the injector unit comprising:
an injector member comprising:
   an elongate feed conduit;
the injector unit being supported by the support frame such that, in use of the agricultural spraying apparatus, the injector member may penetrate the raised ridge to permit injection of liquid product into the raised ridge;
characterised in that the injector unit comprises a depth adjustment mechanism permitting relative movement between the injector member and the support frame such that a depth of penetration of the injector member into the raised ridge may be adjusted.

Similar to the benefits of the second aspect, enabling alteration of the depth of penetration of the injector member into the raised ridge allows for more accurate and flexible injection of the liquid product into the raised ridge. For example, different injector units may be set up to inject liquid product close to the side face, at mid-depth and/or towards a centre of the raised ridge.

The agricultural spraying apparatus of the third aspect may comprise one or more of the following features which may be present singularly or in any combination.

The depth adjustment mechanism may permit alteration of an effective protruding length of the injector member.

The injector unit may further comprise an injector unit body which is coupled to the support frame and the injector member is coupled to the injector unit body to permit the injector member to be selectively fixed relative to the injector unit body in a plurality of configurations, each having a different effective protruding length of the injector member from the injector unit body.

In any of the above aspects the agricultural spraying apparatus may comprise one or more of the following features which may be present singularly or in any combination:
- The agricultural spraying apparatus may comprise a plurality of injector units. The injector units may be locatable in use on one or both sides of the raised ridge. Each side may be provided with one, two, or more injector units;
- The agricultural spraying apparatus may be configured to treat one, two or more raised ridges simultaneously by provision of injector units arranged to be deployable against one, two, or more parallel raised ridges;
- Each injector unit is preferably provided with one injector member;
- The support frame may comprise one or more transverse beams having one or more dependent beams supporting the injector unit(s);
- The longitudinally-extending ridge plates described above may be supported by the one or more dependent beams;
- Each injector unit may be mounted to the support frame by a suitable fixing means, for example, bolting, welding, etc.
- The agricultural spraying apparatus may further comprise one or more foliage sprayers for application of liquid product outside the raised ridge;
- The depth adjustment mechanism may comprise means for frictional engagement of the injector member and/or a locking pin configured to be selectively engageable in one of a plurality of apertures in the injector member;
- The angle adjustment mechanism may comprises means for frictional engagement of at least a part of the injector unit body and/or a locking pin configured to act as a detent;
- The liquid product may be a fertilizer product;
- The injector unit may comprise means for supplying the liquid product to the elongate feed conduit. For example, a proximal end of the elongate feed conduit may be provided with a coupling for attachment to a supply tube;
- The elongate feed conduit may have one or a series of holes. These holes act as outlet(s) for the liquid product. These hole(s) may be arranged in the side of the elongate feed conduit or as part of a nozzle that may be screwed into the distal end of the elongate feed conduit;
- The blade element may be formed of a wear-resistant material such as Hardox available from SSAB AB of Stockholm, Sweden;
- The elongate feed conduit may be formed of stainless steel;
- The agricultural spraying apparatus may be a self-propelled or machine-towed apparatus. For example, the agricultural spraying apparatus may be a vehicle, for example a tractor, which incorporates permanently or semi-permanently the support frame bearing the injector unit. Alternatively, the agricultural spraying apparatus may be an attachment (towed or otherwise) which is coupled in use to a vehicular unit, for example a tractor.

The present disclosure also extends to an injector unit suitable for forming a part of the agricultural spraying apparatus as described above.

### Brief Description of the Drawings

By way of example only, embodiments of an agricultural spraying apparatus according to the present disclosure will now be described with reference to, and as shown in, the following drawings, in which:
Figure 1 is a schematic figure of an agricultural spraying apparatus deployed over two parallel raised ridges formed in a terrain;
Figure 1A is a schematic figure similar to Figure 1, but showing an agricultural spraying apparatus deployed over a raised ridge formed in a terrain;
Figure 2 is a schematic view in elevation of a part of an agricultural spraying apparatus according to the present disclosure;
Figure 3 is a perspective view of an injector unit suitable for the agricultural spraying apparatus of Figure 2;
Figure 4 is a perspective view of a part of the agricultural spraying apparatus of Figure 2 showing two of the injector units of Figure 3 mounted to a longitudinally-extending ridge plate;
Figures 5 to 8 are perspective views from various angles of parts of the agricultural spraying apparatus;
Figure 9 is a schematic figure showing a cross-section of a raised ridge and an injector member of the agricultural spraying apparatus protruding to a first depth;
Figure 10 is an equivalent figure to Figure 9 showing the injector member of the agricultural spraying apparatus protruding to a second depth;
Figure 11 is a schematic figure showing a cross-section of a raised ridge and an injector member of the agricultural spraying apparatus at two different angles of penetration; and
Figure 12 is a schematic figure showing a plan view of a raised ridge and an injector member of the agricultural spraying apparatus at two different angles of deflection.

### Detailed Description

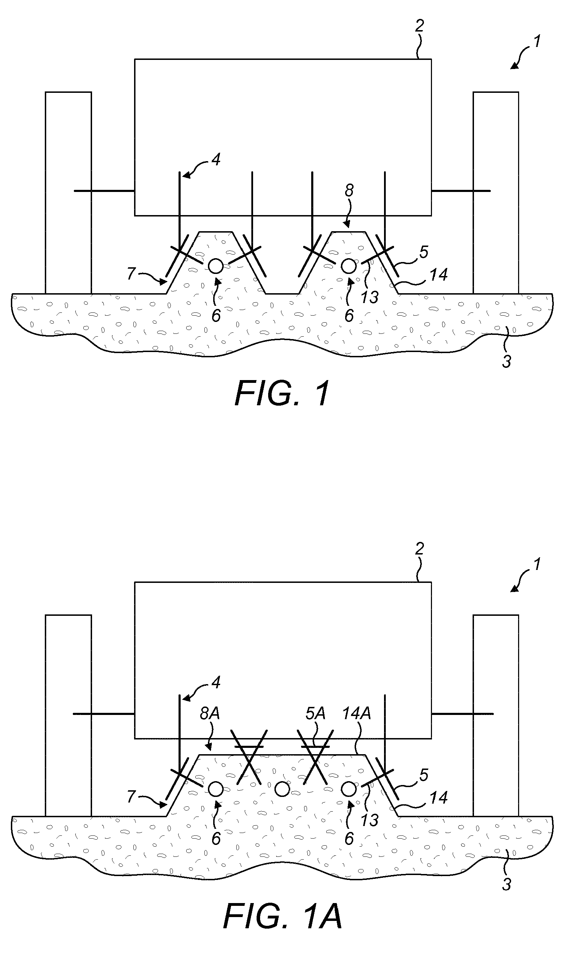

Figures 1 and 1A illustrate in schematic representation an agricultural spraying apparatus 1 deployed over one or more raised ridges 8 formed in a terrain 3 which may be, for example, a field. The agricultural spraying apparatus 1 comprises a support frame 4 bearing one or more injector units 7. The support frame 4 may be incorporated as part of a vehicle such as a tractor 2 as shown in Figures 1 and 1A or may be part of an attachment which is coupled to a vehicle, such as the tractor 2 in use, for example a towed trailer-unit.

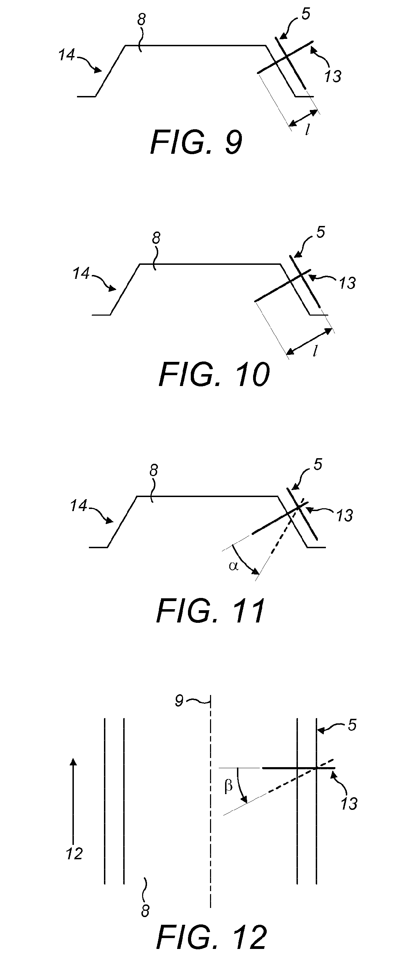

The raised ridges 8 are generally trapezoidal in cross-section, having angled side faces 14 which extend upwardly from a surrounding level of the terrain 3. A crop to be grown, such as potatoes 6, is located within each raised ridge 8. As shown in Figure 12, the raised ridge 8 is elongate and will typically be straight, having a longitudinal axis 9, but this need not be the case. In use, as described further below, the agricultural spraying apparatus 1 traverses the terrain 3 along the raised ridge 8 in the direction marked by arrow 12 in Figure 12 which will be referred to below as the direction of movement 12 of the agricultural spraying apparatus 1.

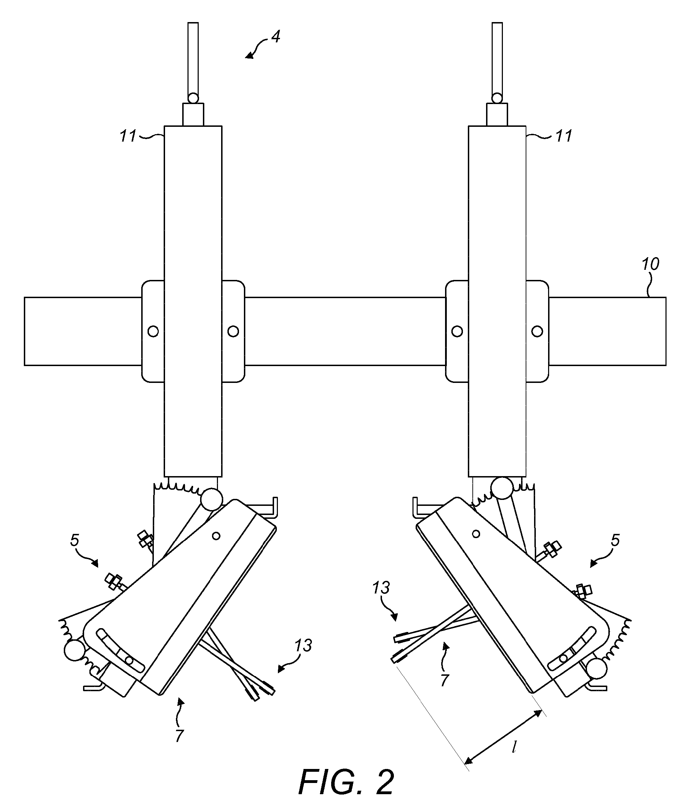

As shown in more detail in Figure 2, the support frame 4 may comprise a cross-beam 10 which extends generally horizontally and to which are mounted one, two or more dependent beams 11 which descend vertically from the cross-beam 10 towards the terrain 3. At a lower distal end of each dependent beam 11 is attached a longitudinally-extending ridge plate 5 to which each injector unit 7 is mounted. Each longitudinally-extending ridge plate 5 may be supported by one or more dependent beams 11. Preferably, the agricultural spraying apparatus 1 is provided with one or more sets of longitudinally-extending ridge plates 5 - each set comprising two longitudinally-extending ridge plates 5 deployable on either side of the raised ridge 8 as shown schematically in Figures 1 and 1A. In Figure 1 two sets of longitudinally-extending ridge plates 5 are shown deployed on either side of two parallel raised ridges 8. In Figure 1A one set of longitudinally-extending ridge plates 5 are deployed on either side of a single raised ridge 8. In addition two further longitudinally-extending ridge plates 5A are deployed above a top side of the raised ridge 8.

The plane of each longitudinally-extending ridge plate 5 can be canted inwardly towards a centre line of the raised ridge 8 such that the longitudinally-extending ridge plate 5 is orientated or substantially parallel to the side face 14 of the raised ridge 8 as shown in Figure 1. Alternatively, or additionally, the plane of other longitudinally-extending ridge plates 5A can be flat on top of the raised ridge 8A such that the longitudinally-extending ridge plate 5A is orientated or substantially parallel to the top face of the raised ridge 8 as shown in Figure 1A.

The longitudinally-extending ridge plates 5 and 5A are orientated on the agricultural spraying apparatus 1 so as to extend in line with the longitudinal axis 9 of the raised ridge 8 in use.

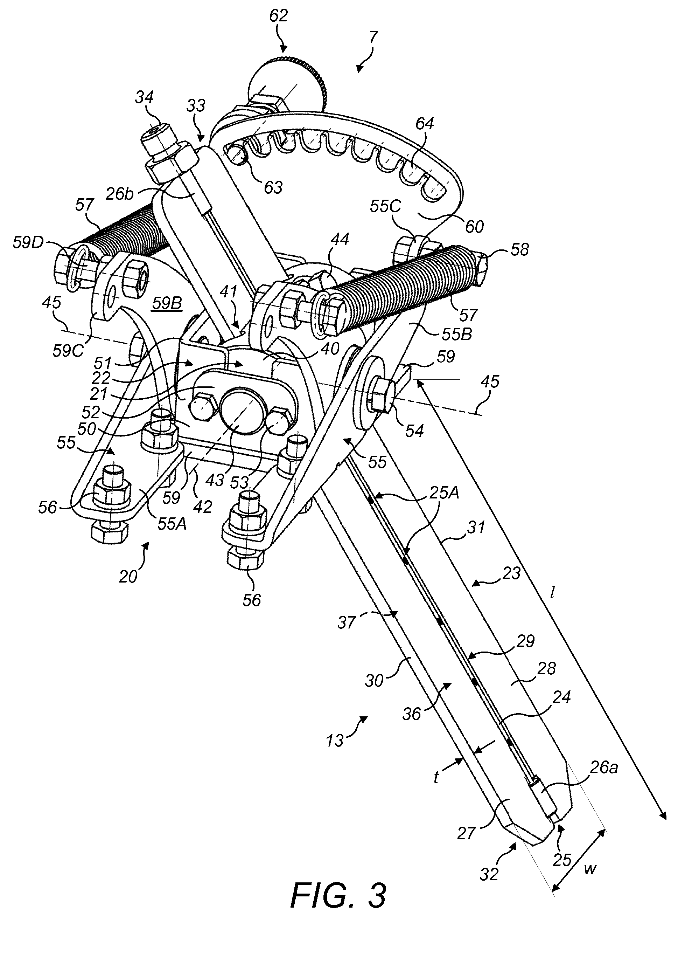

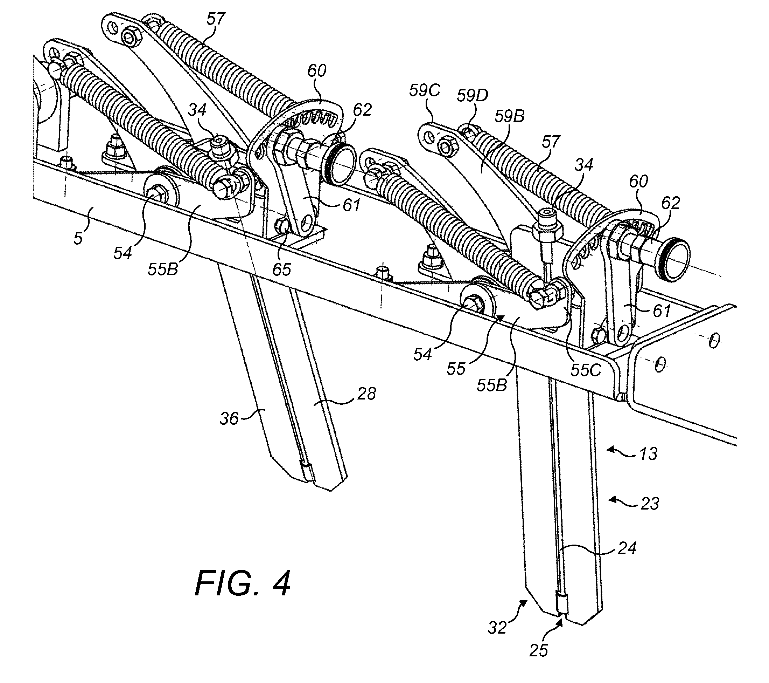

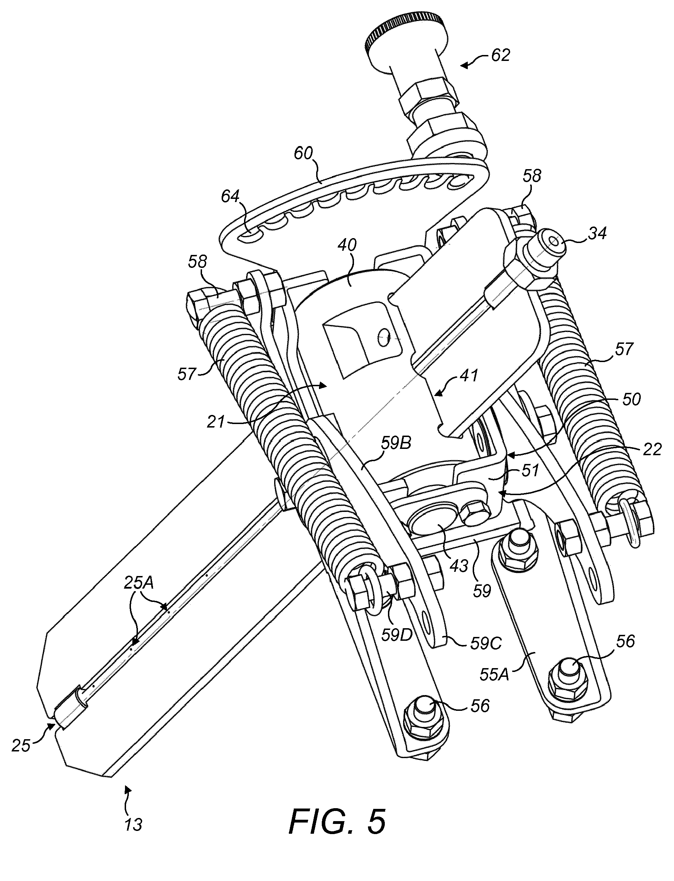

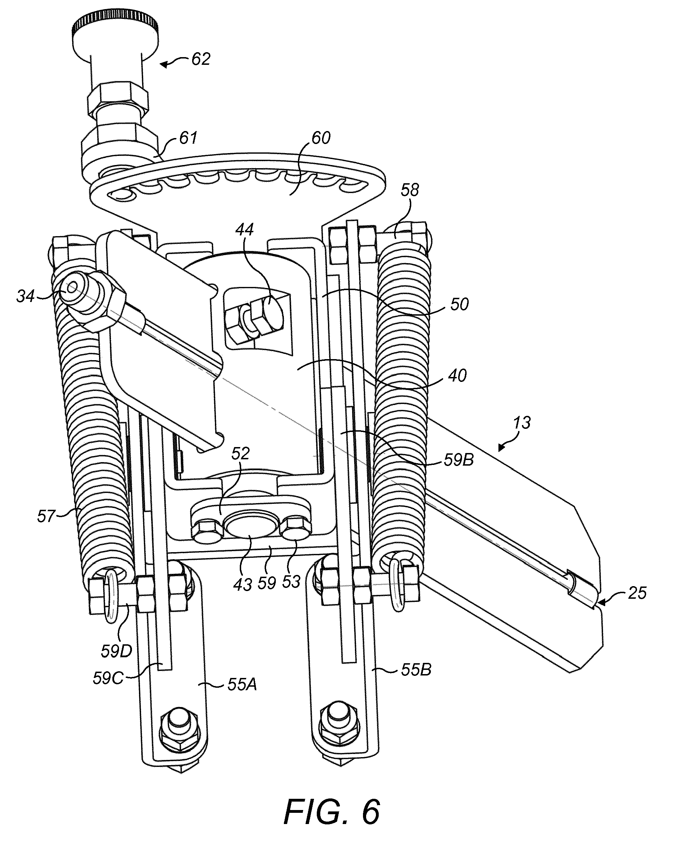

Each longitudinally-extending ridge plate 5 is provided with one or more injector units 7. Figure 3 illustrates the components of a single injector unit 7 dismounted from its longitudinally-extending ridge plate 5. Figure 4 illustrates two such injector units 7 mounted to a longitudinally-extending ridge plate 5. Figures 5 to 8 illustrate further views and angles showing details of the injector unit 7 and the associated longitudinally-extending ridge plate 5.

As most clearly seen in Figure 3, the injector unit 7 comprises an injector unit body 20 and an injector member 13. The injector unit body 20 serves to provide a mounting point for the injector member 13 and allows the effective protruding length 1 of the injector member 13 and the angle of penetration α to be adjusted. Further functions of the injector unit body 20 will be described further below.

The injector unit body 20 comprises a first part 21 and a second part 22 which are articulated relative to one another. The second part 22 comprises an outer body 50 having a base plate 59, from which walls 51 extend in order to define a generally cuboid-shaped cavity which receives in use the first part 21, and two generally triangular-shaped upstanding parts 59B which each extend upwardly to a distal end 59C. A cross shaft 54 is provided towards one end of the outer body 50 which extends outwardly from two of the walls 51 of the outer body 50. The cross shaft 54 is pivotally mounted to two fixing plates 55 fixed on either side of the outer body 50. Thus, the second part 22 is rotatable about a second axis 45 which extends along the centre of cross shaft 54.

Each fixing plate 55 is somewhat L-shaped having a basal part 55A, by which the fixing plate is mounted by means of bolts 56 to the longitudinally-extending ridge plate 5, and a generally triangular-shaped upstanding part 55B which extends upwardly to a distal end 55C. The cross shaft 54 extends through apertures formed in the upstanding parts 55B. Each fixing plate 55, as well as providing a pivot point for the cross shaft 54, comprises a fixing point at the distal end 55C providing an attachment point for one end of a spring 57 (two springs 57 being provided on each injector unit 7). The fixing point as shown in the illustrated example is an attachment bolt or bar 58 mounted in a hole at the distal end 55C of the fixing plate 55. The spring 57 is operatively engaged between the attachment bolt or bar 58 and a similar attachment bolt or bar 59D similarly mounted at the distal end 59C of the upstanding portion 59B of the base plate 59. As shown in Figure 3, preferably the two springs 57 are provided, one on either end of the cross shaft 54 on opposed sides of the outer body 50. The spring-mounting of the second part 22 with respect to the fixing plates 55 by means of the springs 57 allows relative movement between the second part 22 and the base plate 59 as will be described further below.

The first part 21 comprises an inner body 40 of a somewhat cylindrical shape having a through slot 41 which slidingly receives in use the injector member 13. The inner body 40 is provided with a pivot shaft 43 which extends from each end of the inner body 40 to be pivotally received within bearing points on the outer body 50 of the first part 21. At one end of the outer body 50 a mounting plate 52 and bolts 53 are provided to retain the inner body 40 within the cavity of the outer body 50 while allowing the inner body 40 to rotate relative to the outer body 50 about a first axis 42 which extends along the centre of the pivot shaft 43. At the opposite end of the outer body 50, the inner body 40 is retained within the cavity by means of the fixing of a detent plate 60 to the outer body 50 as will be described further below.

As can be seen in Figure 3, the first axis of rotation 42 is orientated perpendicular to the second axis of rotation 45.

The injector member 13 comprises a blade element 23 which is slidingly received in the slot 41 of the inner body 40 and an elongate feed conduit 24. The blade element 23 comprises a leading section 27 and a trailing section 28 which are separated for much of their length by a groove 29. The leading section 27 and trailing section 28 are connected by means of first and second tubular sections 26a and 26b of relatively short length provided respectively at a distal end 32 and a proximal end 33 of the blade element 23. As well as serving the structural function of joining the leading section 27 to the trailing section 28, the first and second tubular sections 26a and 26b serve to provide a means for mounting the elongate feed conduit 24 within the blade element 23. The first tubular section 26a serves as a mounting point for a distal end of the elongate feed conduit 24. The elongate feed conduit 24 may be slid into the first tubular section 26a to form a location. The elongate feed conduit 24 may comprise a nozzle 25 and/or a series of holes 25A arranged along the length of the elongate feed conduit 24. The nozzle 25 may be formed as an integral part of the elongate feed conduit 24 or as a separate component coupled to the elongate feed conduit 24. In either case it is preferred that the nozzle outlet 25 does not extend beyond the outer end of the first tubular section 26a so that it is not exposed to impact damage. Further, (in a non-illustrated variant) the leading section 27 of the blade element 23 may be longer than the trailing section 28 so that a distal end of the leading section 27 extends slightly beyond the outer end of the first tubular section 26a. Thus, the leading section 27 can serve a shielding function limiting impact damage to the outer end of the first tubular section 26a and clogging of the same by earth.

The second tubular section 26b forms a mounting in which the elongate feed conduit 24 can be locked into. A fluid coupling 34 is provided at the proximal end 33 attached to the proximal end of the elongate feed conduit 24 to permit supply in use of a liquid product into the elongate feed conduit 24.

The leading section 27 of the blade element 23 defines a leading edge 30 of the blade element 23 while the trailing section 28 defines a trailing edge 31. The blade element 23 has a thin profile - that is the thickness t as shown in Figure 3 between a first face 36 and a second face 37 of the blade element 23 is small, preferably no more than 5mm. The thickness t of the blade element 23 may taper towards the leading edge 30 and/or trailing edge 31. Alternatively, and as shown in the figures, the blade element 23 may have an even thickness t with flat first and second faces 36, 37 (with the exception of the protuberances of the first and second tubular sections 26a and 26b). In either case the maximal thickness t of the blade element 23 is significantly less than the effective protruding length 1 and/or width w of the blade element 23. In use, when the agricultural spraying apparatus 1 is moved through the raised ridge 8 in the direction of movement 12, the blade element 23 is orientated such that the leading edge 30 is foremost and the plane of the blade element 23 is parallel, or substantially parallel, to the direction of movement 12. Thus in this way, the blade element 23 present only a thin sectional profile to the raised ridge 8 leading to less disruption of the earth during traversal of the injector unit 7.

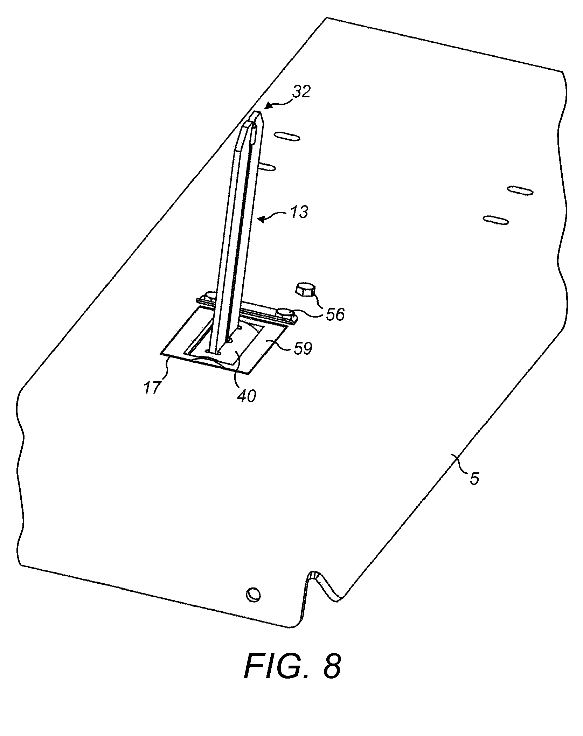

Each injector unit 7 is mounted to a longitudinally-extending ridge plate 5 such that the distal end 32 of the blade element 23 projects through an aperture 17 provided in the longitudinally-extending ridge plate 5 as best shown in Figure 8.

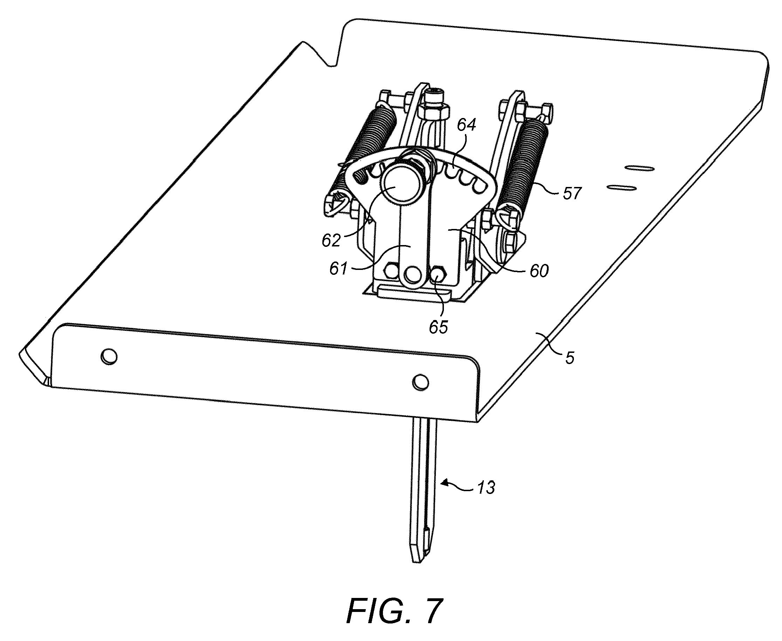

As shown most clearly in Figures 3, 4 and 7, the injector unit 7 is provided with an angle adjustment mechanism for use in setting the relative rotational angle of the inner body 40 to the outer body 50 and in this way altering the angle of penetration α of the blade element 23. The angle adjustment mechanism comprises a pivot arm 61 which is fixedly mounted to one end of the pivot shaft 43 such that rotation of the pivot arm 61 about the first axis 42 produces a corresponding rotation of the inner body 40 and blade element 23. Further, the angle adjustment mechanism comprises the detent plate 60 which has a fan-shaped plate which is fixedly bolted by means of bolts 65 to the second part 22. As shown in Figure 7, a distal end of the detent plate 60 is provided with a series of notches 64. The pivot arm 61 is provided with a handle 62 having a locking slide pin 63 which is shaped to be engageable selectively in the notches 64. The locking slide pin 63 is orientated perpendicular to the detent plate 60. As shown schematically in Figure 11, the injector member 13 may project perpendicularly from the longitudinally-extending ridge plate 5 when viewed in the direction of movement 12 as shown by the solid line representation of the injector member 11 in Figure 11. This may be nominally labelled an angle of penetration α of 0 degrees. The angle of penetration α may be adjusted by, for example, up to + or - 30 degrees. The dashed line in Figure 11 represents an adjustment of +30 degrees.

The injector unit 7 is further provided with a depth adjustment mechanism allowing the effective protruding length 1 of the blade element 23 to be adjusted. The effective protruding length 1 is defined as the length of that part of the blade element 23 extending beyond the inner face of the longitudinally-extending ridge plate 5.

In the example shown in Figure 3, the depth adjustment mechanism comprises a set screw 44 provided as part of the first part 21 which makes frictional engagement with the first face 36 of the blade element 23. The effective protruding length 1 of the blade element 23 may be adjusted by the slackening off the set screw 44 and sliding the blade element 23 through the slot 41 until the desired length of the blade element 23 is protruding from the longitudinally-extending ridge plate 5. The set screw 44 may then be retightened to set the new effective protruding length *l*. Figures 9 and 10 schematically represent the adjustment of the effective protruding length 1 from a relatively short length in Figure 9 to a relatively long length in Figure 10. In practice the effective protruding length may be chosen to vary between the limits of 4 and 30 cm.

The injector unit 7 is further provided with a break-back mechanism by means of the spring-mounting of the second part 22 with respect to the longitudinally-extending ridge plate 5. As described above, the springs 57 act between the distal ends 55C of the fixing plates 55 and the distal ends 59C of the upstanding portions 59B of the base plate 59. The springs 57 bias the second part 22 into the position shown in Figures 3 and 8 wherein the base plate 59 is flush and aligned with the longitudinally-extending ridge plate 5. This is the default operative angular position of the second part 22. In this position the blade element 23 of the injector member 13 projects perpendicularly to the longitudinally-extending ridge plate 5 when viewed from above, as shown by the solid line representation of the injector member 13 in Figure 12. However, if the blade element 23 contacts a substantial obstruction within the raised ridge 8, for example a large stone or rock, the break-back mechanism allows the blade element 23 to be deflected backwards by rotation of the second part 22 through an angle β against the bias of the springs 57 so that the distal end 32 of the blade element 23 is directed rearwards relative to the direction of movement 12 as shown by the dashed line representation of the injector member 13 in Figure 12. In this way the effect of any impact is lessened and the chance of damage to the injector member 13 is reduced. Once past the obstruction the injector member 13 is biased back into its default operative angular position.

In use, the agricultural spraying apparatus may be set up for use as follows:

A supply of the liquid product to be injected is connected to the fluid coupling 34 of each injector unit 7. The supply is preferably carried on the agricultural spraying apparatus 1 and may comprise one or more tanks and suitable pumps. A combination of liquid product tanks and fresh water tanks may be utilised allowing for contemporaneous dilution of concentrated liquid product at the time of spraying. Different injector units 7 may be supplied with different liquid products allowing more than one product to be injected into the raised ridge 8 during one pass of the agricultural spraying apparatus 1. In one example, the supply comprises two, three or four Dosatron (RTM) tank and pump units (available from Dosatron International S.A.S. of Tresses, France) each having a capacity of 50 litres; and a 1,000 litre fresh water tank for dilution.

The angle of penetration α may be adjusted if required on each injector unit 7 individually. This allows differing angles to be used on different injector units 7 to increase distribution of the liquid product within the raised ridge 8. The angle of penetration α may be easily set by hand by operation of the handle 62 on each injector unit 7.

The depth of penetration 1 may be adjusted if required on each injector unit 7 individually. This allows differing depths of injection to be provided by different injector units 7 to increase distribution of the liquid product within the raised ridge 8. The depth of penetration 1 may be easily set by hand by spanner adjustment of set screw 44 on each injector unit 7.

Once set up the agricultural spraying apparatus 1 is conveyed along the raised ridge 8 such that the injector members 13 traverse the raised ridge 8. During said traversal the liquid product is pumped into and through the elongate feed conduit 24 of each injector member 13 and discharged from the nozzle 25 and/or holes 25A. During use the longitudinally-extending ridge plates 5 may be located adjacent the side faces 14 of the raised ridge 8. In desired there may be set a spacing between the side face 14 and the longitudinally-extending ridge plates 5.

The injector unit 7 may be formed from any suitable materials meeting the requirements of product compatibility and wear resistance. It is preferred that the blade element 23, in particular the leading section 27 and the trailing section 28 be formed from a wear-resistant material, for example, Hardox (RTM). The elongate feed conduit 24 may be formed from stainless steel.

## Claims

1. An agricultural spraying apparatus for injecting a liquid product into a raised ridge formed in a terrain, the agricultural spraying apparatus comprising an injector unit mounted to a support frame;
the injector unit comprising:
an injector member comprising:
an elongate feed conduit;
the injector unit being supported by the support frame such that, in use of the agricultural spraying apparatus, the injector member may penetrate the raised ridge to permit injection of liquid product into the raised ridge;
**characterised in that** the injector member of the injector unit is sprung-mounted so as to be pivotally-movable relative to the support frame.

2. An agricultural spraying apparatus as claimed in claim 1, wherein the injector member is biased by its spring-mounting into a rest position in which it extends from the support frame perpendicularly to the direction of movement of the agricultural spraying apparatus but is pivotable against the bias of the spring-mounting on encountering an obstruction in the raised ridge into a deflected position in which a distal end of the injector member is rearward-directed relative to the direction of movement of the agricultural spraying apparatus.

3. An agricultural spraying apparatus as claimed in claim 1 or claim 2, wherein the injector unit further comprises an injector unit body which is sprung-mounted to the support frame and the injector member is coupled to the injector unit body, and wherein optionally the injector unit body comprises a first part coupled to the injector member and a second part which is sprung-mounted to the support frame, wherein optionally the first part and second part are pivotally mounted to each other, and wherein optionally the first part and the second part are pivotally connected to each other about a first axis and the second part is pivotally connected to the support frame about a second axis which is perpendicular to the first axis.

4. An agricultural spraying apparatus as claimed in claim 3, wherein the injector member is pivotable into the deflected position by rotation of the second part about the second axis, and wherein optionally rotation of the first part about the first axis permits an angle of penetration of the injector member into the raised ridge to be adjusted.

5. An agricultural spraying apparatus as claimed in any preceding claim, wherein the support frame comprises a longitudinally-extending ridge plate located and angled to be positioned, in use, in proximity to a side of the raised ridge formed in the terrain.

6. An agricultural spraying apparatus as claimed in claim 5, wherein the injector member is biased by its spring-mounting into a rest position in which it extends perpendicularly to the longitudinally-extending ridge plate but is pivotable against the bias of the spring-mounting on encountering an obstruction into a deflected position in which the injector member is rearward-directed relative to the direction of movement of the agricultural spraying apparatus.

7. An agricultural spraying apparatus as claimed in claim 5 or claim 6 wherein the injector unit is mounted to the longitudinally-extending ridge plate with the injector member protruding through an aperture in the longitudinally-extending ridge plate.

8. An agricultural spraying apparatus as claimed in any preceding claim, wherein the injector member further comprises a blade element for cutting through the raised ridge during use of the agricultural spraying apparatus.

9. An agricultural spraying apparatus as claimed in claim 8 wherein an outer diameter of the elongate feed conduit is less than or equal to a thickness of the blade element and the elongate feed conduit is mounted within the blade element such that an external surface of the elongate feed conduit is flush with, or recessed relative to, first and second faces of the blade element.

10. An agricultural spraying apparatus as claimed in claim 8 or claim 9, wherein the blade element has a thickness of 5 mm or less.

11. An agricultural spraying apparatus as claimed in any of claims 8 to 10, wherein the blade element comprises one or more mounting points for connection to the elongate feed conduit.

12. An agricultural spraying apparatus as claimed in any of claims 8 to 11, wherein the blade element is reversibly-mountable within the injector unit and comprises a mounting point at each end of the blade element for connection to the elongate feed conduit.

13. An agricultural spraying apparatus as claimed in any of claims 8 to 12, wherein the injector unit further comprises a depth adjustment mechanism permitting relative movement between the blade element and the support frame such that a depth of penetration of the injector member into the raised ridge may be adjusted, and wherein optionally the depth adjustment mechanism permits alteration of an effective protruding length of the blade element from the support frame.

14. An agricultural spraying apparatus for injecting a liquid product into a raised ridge formed in a terrain, the agricultural spraying apparatus comprising an injector unit mounted to a support frame;
the injector unit comprising:
an injector member comprising:
an elongate feed conduit;
the injector unit being supported by the support frame such that, in use of the agricultural spraying apparatus, the injector member may penetrate the raised ridge to permit injection of liquid product into the raised ridge;
**characterised in that** the injector unit comprises an angle adjustment mechanism permitting relative movement between the injector member and the support frame such that an angle of penetration of the injector member into the raised ridge may be adjusted.

15. An agricultural spraying apparatus for injecting a liquid product into a raised ridge formed in a terrain, the agricultural spraying apparatus comprising an injector unit mounted to a support frame;
the injector unit comprising:
an injector member comprising:
an elongate feed conduit;
the injector unit being supported by the support frame such that, in use of the agricultural spraying apparatus, the injector member may penetrate the raised ridge to permit injection of liquid product into the raised ridge;
**characterised in that** the injector unit comprises a depth adjustment mechanism permitting relative movement between the injector member and the support frame such that a depth of penetration of the injector member into the raised ridge may be adjusted.
